# EUROPEAN PATENT APPLICATION

(11) **EP 4 733 887 A1**
(43) Date of publication of application: **29.04.2026**
(21) Application number: 25170637.0
(22) Date of filing: 15.04.2025
(51) Int. Cl.: G06F 1/16, G06F 1/20

(54) **CLAMSHELL ELECTRONIC DEVICE CASE**

(30) Priority: 28.10.2024 TW 113141153
(71) Applicant: Wistron Corporation, New Taipei City 22181 (TW)
(72) Inventor: WU, Yen Hsun, New Taipei City 22181 (TW); TSAI, Yu Hui, New Taipei City 22181 (TW); CHU, Yu Wei, New Taipei City 22181 (TW); LIAO, Yen Tzu, New Taipei City 22181 (TW); YAO, Hong Da, New Taipei City 22181 (TW); CHENG, Chienhung, New Taipei City 22181 (TW); LU, Chunyi, New Taipei City 22181 (TW); LIANG, Ti Shiang, New Taipei City 22181 (TW); CHENG, Hsi Che, New Taipei City 22181 (TW); LEE, Wei Kuo, New Taipei City 22181 (TW)
(74) Representative: Viering, Jentschura & Partner mbB Patent- und Rechtsanwälte

(57) **Abstract**

A clamshell electronic device case (10) includes a cover (11), a host casing (13), and a supporting plate (15). The host casing (13) is pivotally connected to the cover (11) and includes a first part (13A) and a second part (13B). The first part (13A) and the second part (13B) are matched and detachably connected to each other. The supporting plate (15) is located inside the host casing (13). A connection state of the first part (13A) with respect to the second part (13B) is in response to relative displacement of the supporting plate (15) and the first part (13A).

## Description

### BACKGROUND

### Technical Field

The present disclosure relates to a case design, and in particular, to a clamshell electronic device case.

### Related Art

Recently, the market of notebook computers has shown an obvious trend of a small volume (for example, thinning) and high efficiency. However, the small size may cause design contradictions with an increase in heat dissipation requirements caused by improving efficiency and power consumption. Although the small volume improves portability of the notebook computer, it also limits a capacity of a cooling system and configuration of heat dissipation holes, resulting in performance problems and even affecting user experience. For example, structural conditions such as sizes, a spacing, and a distribution area of holes on a casing of the notebook computer not only affect heat dissipation efficiency and structural strength of the notebook computer, but also affect appearance modeling of the notebook computer. Therefore, how to strike a balance between appearance design and heat dissipation requirements is a topic that is constantly discussed.

### SUMMARY

In some embodiments, a clamshell electronic device case includes a cover, a host casing, and a supporting plate. The host casing is pivotally connected to the cover and includes a first part and a second part. The first part and the second part are matched and detachably connected to each other. The supporting plate is located inside the host casing. A connection state of the first part with respect to the second part is in response to relative displacement of the supporting plate and the first part.

In some embodiments, a clamshell electronic device case includes a cover, a host casing, and a supporting plate. The host casing is pivotally connected to the cover and includes a main casing, a rear cover, and a telescopic section. The main casing has a connection side edge and a free side edge opposite to each other, and the cover is pivotally connected to the connection side edge. The telescopic section is coupled between the connection side edge of the main casing and the rear cover. The supporting plate is located in the main casing and slidably arranged on the main casing. A side edge of the supporting plate protrudes out of the main casing through the connection side edge of the main casing. In addition, a connection state of the rear cover to the main casing is in response to translation of the supporting plate with respect to the main casing.

In some embodiments, a clamshell electronic device case includes a cover, a host casing, and a supporting plate. The host casing is pivotally connected to the cover, and includes a main casing and a sliding casing. The main casing has a connection side edge and a free side edge opposite to each other, and the cover is pivotally connected to the connection side edge. A front outer surface of the main casing is provided with a keyboard area. The sliding casing is located on a side of the main casing opposite to the front outer surface and slidably connected to the main casing. The supporting plate is located inside the host casing and fixed to an inner surface of the main casing. A connection state of the sliding casing to the main casing is in response to translation of the sliding casing with respect to the supporting plate.

Based on the above, in the clamshell electronic device case of any embodiment, the host casing is divided into more than two casing blocks, and a displacement structure is used to separate two adjacent casing blocks based on heat dissipation efficiency requirements, to expand the internal space and further increase a heat dissipation area and an air intake area.

### BRIEF DESCRIPTION OF THE DRAWINGS

FIG. 1 is a schematic three-dimensional view of a clamshell electronic device case in a closed state according to a first embodiment.
FIG. 2 is a schematic three-dimensional view of a clamshell electronic device case in an opened state according to a first embodiment.
FIG. 3 is a rear view of a clamshell electronic device case in a retracted state according to a second embodiment.
FIG. 4 is a side view of the clamshell electronic device case of FIG. 3.
FIG. 5 is a rear view of a clamshell electronic device case in a slid-open state according to a second embodiment.
FIG. 6 is a side view of the clamshell electronic device case of FIG. 5.
FIG. 7 is an exploded view of the clamshell electronic device case of FIG. 1.
FIG. 8 is a bottom view of the clamshell electronic device case of FIG. 2.
FIG. 9 is an enlarged view of an area P31 of FIG. 8.
FIG. 10 is a schematic three-dimensional view of a linkage structure in a closed state.
FIG. 11 is a partial enlarged view of a linkage structure in an opened state.
FIG. 12 is a partial exploded view of the clamshell electronic device case of FIG. 2.
FIG. 13 is a partial perspective view of the clamshell electronic device case of FIG. 2.
FIG. 14 is a schematic three-dimensional view of a clamshell electronic device case in a slid-open state according to a third embodiment.
FIG. 15 is a partial exploded view of the clamshell electronic device case of FIG. 14.
FIG. 16 is a partial assembly view of the clamshell electronic device case of FIG. 15.
FIG. 17 is a schematic three-dimensional view of a supporting plate and a linkage structure of FIG. 16.
FIG. 18 is a schematic diagram of a structural change of automatic retraction of the clamshell electronic device case of FIG. 6.
FIG. 19 is a schematic three-dimensional view of an elastic stop assembly of a clamshell electronic device case according to a fourth embodiment.
FIG. 20 is a partial schematic view of a guide assembly in a clamshell electronic device case according to a fifth embodiment.
FIG. 21 is a rear view of a clamshell electronic device case in a slid-open state according to a sixth embodiment.
FIG. 22 is a rear view of a clamshell electronic device case in a slid-open state according to a seventh embodiment.
FIG. 23 is a rear view of a clamshell electronic device case in a slid-open state according to an eighth embodiment.

### DETAILED DESCRIPTION

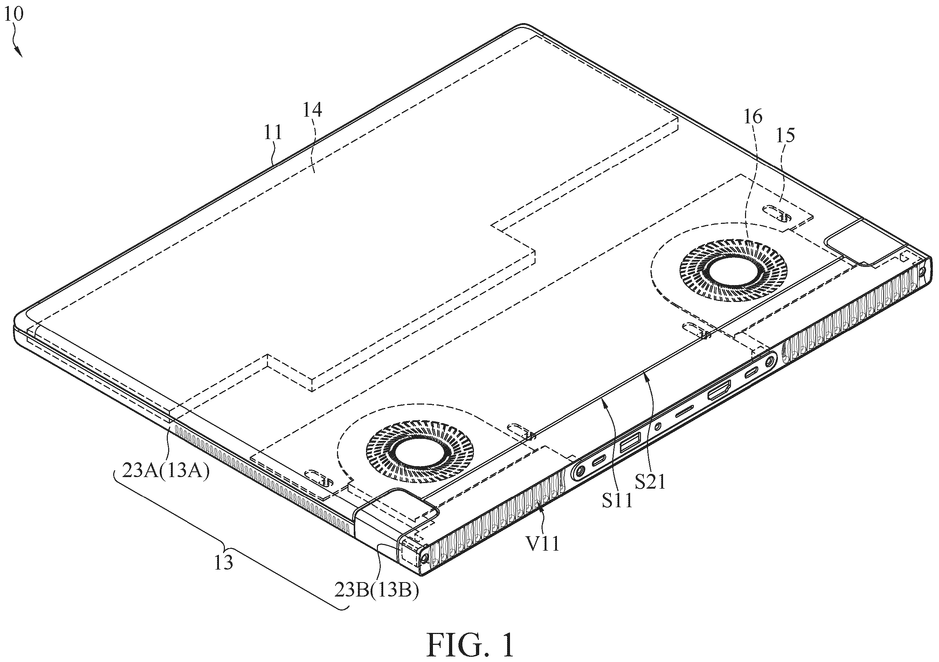

Referring to FIG. 1 to FIG. 2 or FIG. 3 to FIG. 6, a clamshell electronic device case 10 includes a cover 11, a host casing 13, and a supporting plate 15. The host casing 13 is pivotally connected to the cover 11. The supporting plate 15 is located inside the host casing 13. The host casing 13 has an accommodating space inside. During application, functional components (such as a keyboard module, a motherboard, a heat dissipation module, and a battery module) of a clamshell electronic device are arranged in the accommodating space in the host casing 13.

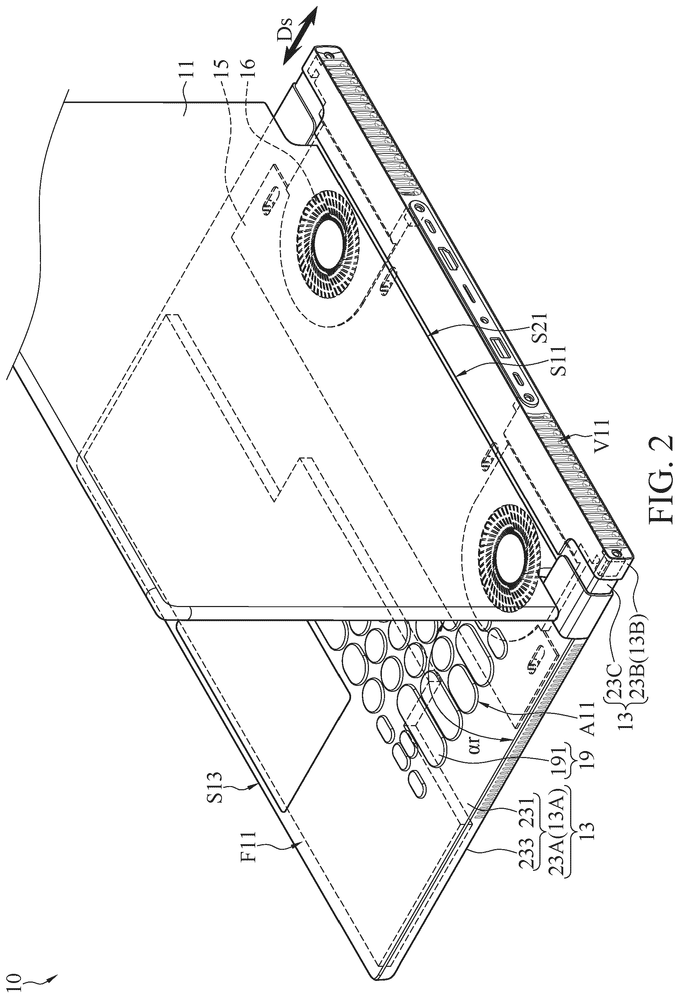

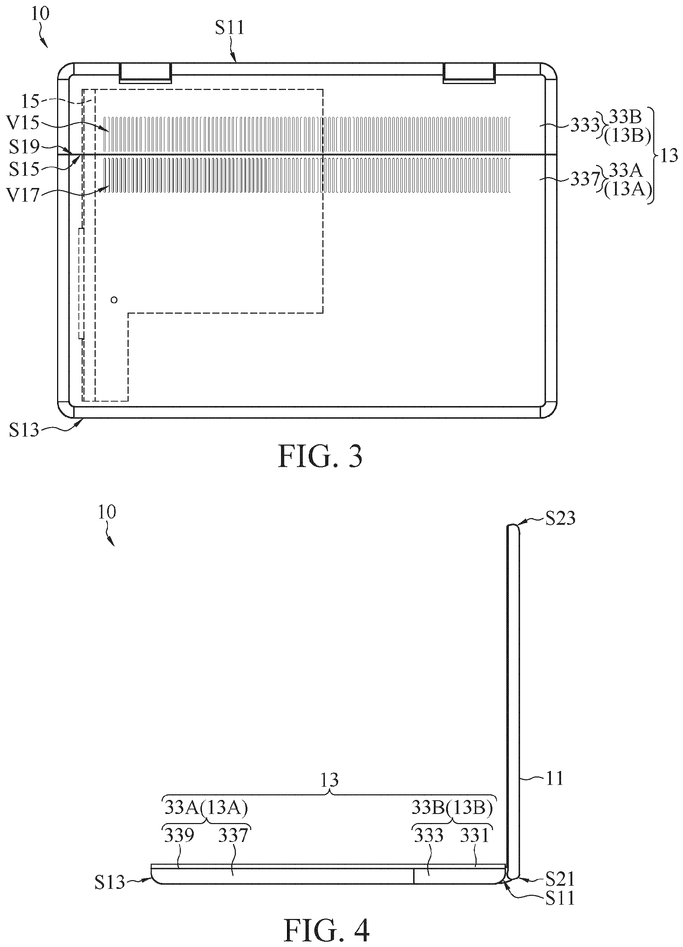

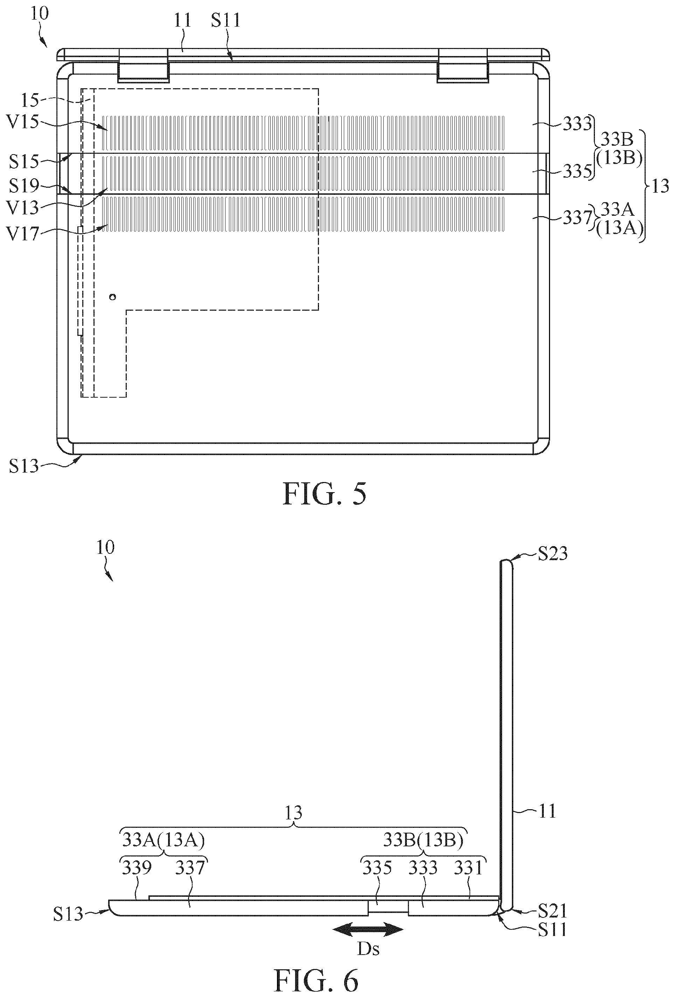

The host casing 13 includes a first part 13A and a second part 13B, and the first part 13A and the second part 13B are detachably engaged with respect to each other. In other words, the first part 13A and the second part 13B are matched (for example, side edges are attached to each other or overlap) and detachably connected to each other. A connection state of the first part 13A to the second part 13B is in response to relative displacement of the supporting plate 15 and the first part 13A, that is, transitions between a connection relationship in which the first part 13A and the second part 13B are detached from each other (as shown in FIG. 2 or as shown in FIG. 3 and FIG. 4) and a connection relationship in which the first part 13A and the second part 13B are connected to each other (as shown in FIG. 1 or as shown in FIG. 5 and FIG. 6). For example, when the first part 13A and the second part 13B are displaced from being detached from each other to being connected to each other, at least one side edge of the first part and at least one side edge of the second part are gradually attached to each other or overlap after being detached from each other. In some embodiments, a moving direction Ds of the relative displacement of the supporting plate 15 and the first part 13A intersects with a side edge of the cover 11 pivotally connected to the host casing 13. In addition, among the side edges intersecting with the moving direction Ds, two side edges of the first part 13A and the supporting plate 15 farthest away from each other gradually move away from or close to each other. In an example, the relative displacement of the supporting plate 15 and the first part 13A may be that the supporting plate 15 translates with respect to the first part 13A in a direction substantially parallel to a surface (such as a front outer surface F11 or an inner surface F13) of the host casing 13. In another example, the relative displacement of the supporting plate 15 and the first part 13A may also mean that the first part 13A translates with respect to the supporting plate 15 in a direction substantially parallel to a surface (such as a front outer surface F11 or an inner surface F13) of the host casing 13.

In some embodiments, the clamshell electronic device case 10 is applicable to (but not limited to) a notebook computer, a clamshell mobile phone, a clamshell electronic dictionary, or the like. In this case, the host casing 13 and the cover 11 may be respectively a host base and a display body. In some other embodiments, the clamshell electronic device case 10 is applicable to (but not limited to) a combination of a tablet computer and a protective cover, a combination of a tablet computer and a tablet keyboard, or the like. In this case, the host casing 13 is a casing of the tablet computer, and the cover 11 is a protective cover or a tablet keyboard.

In some embodiments, referring to FIG. 1, FIG. 2, FIG. 7, and FIG. 8, the first part 13A is a main casing 23A, and the second part 13B is a rear cover 23B. During application, functional components of a clamshell electronic device are arranged in the main casing 23A.

The main casing 23A has two opposite side edges (which are respectively referred to as a connection side edge S11 and a free side edge S13 below). The cover 11 has two opposite side edges (which are respectively referred to as a connection side edge S21 and a free side edge S23 below). The cover 11 can be pivotally connected to a connection side edge S11 of the main casing 23A through the connection side edge S21. Therefore, the cover 11 can rotate with respect to the host casing 13 with the connection side edge S11 (or the connection side edge S21 thereof) as a rotating shaft to transition between opening and closing.

In other words, the clamshell electronic device case 10 has two set states: an opened state and a closed state. In the closed state, the cover 11 and the main casing 23A are closed. In this case, the cover 11 and front outer surfaces F21 and F11 of the main casing 23A are attached to each other and free side edges S23 and S13 of the front outer surfaces overlap, so that the cover 11 is superimposed on the main casing 23A. In the opened state, the cover 11 is opened with respect to the main casing 23A. In this case, the cover 11 stands on the main casing 23A, and the free side edge S23 of the cover 11 is detached from the free side edge S13 of the main casing 23A, so that a non-zero included angle αr is formed between the cover 11 and the main casing 23A. The included angle αr may be formed by intersection of the cover 11 and the front outer surfaces F21 and F11 of the main casing 23A that are adjacent to each other.

The supporting plate 15 is located in the main casing 23A and slidably arranged on the main casing 23A. A side edge (hereinafter referred to as an outer side edge S31) of the supporting plate 15 protrudes out of the main casing 23A through the connection side edge S11 of the main casing 23A. The rear cover 23B is sleeved on the outer side edge S31 of the supporting plate 15. In other words, a side edge (hereinafter referred to as an inner side edge S33) opposite to the outer side edge S31 of the supporting plate 15 is located inside the main casing 23A.

In other words, a connection state of the rear cover 23B to the main casing 23A transitions between separation and connection with each other in response to translation of the supporting plate 15 with respect to the main casing 23A.

In some embodiments, the supporting plate 15 has at least one sliding groove H31 extending along the moving direction Ds of relative displacement. At least one slider B11 protrudes from the inner surface F13 of the main casing 23A. At least one sliding groove H31 corresponds to at least one slider B11, and each slider B11 is slidably arranged to extend through the corresponding sliding groove H31. In some embodiments, the sliding groove H31 on the supporting plate 15 may be an elongated through hole extending through a plate body 251 of the supporting plate 15.

In some embodiments, the main casing 23A is composed of an upper cover 231 and a lower cover 233, and the upper cover 231 is engaged with the lower cover 233 to form an accommodating space therebetween. The upper cover 231 has a keyboard area A11. The supporting plate 15 is located in the accommodating space between the upper cover 231 and the lower cover 233, and is slidably fixed to the inner surface F13 of the upper cover 231. In some embodiments, the slider B11 may be a cylinder protruding from the inner surface F13 of the upper cover 231.

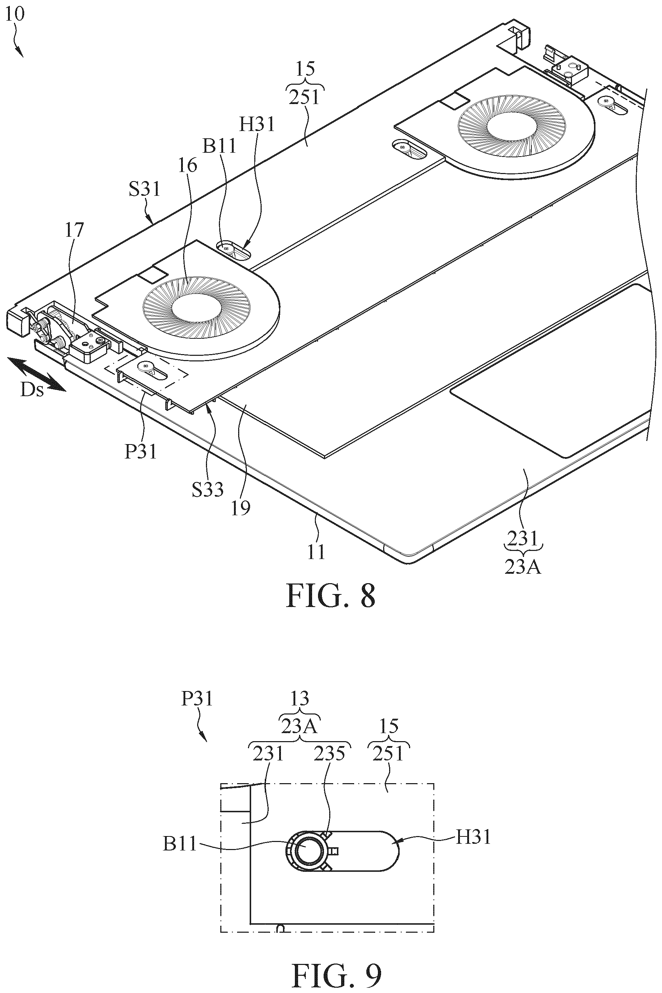

In some embodiments, referring to FIG. 8 and FIG. 9, the host casing 13 may further include at least one limiting structure 235. The at least one limiting structure 235 is configured to limit actuation of relative rotation and/or movement in a transverse direction between the slider B11 and the sliding groove H31 that correspond to each other. Herein, the limiting structure 235 is arranged on a side wall of the slider B11 (as shown in FIG. 9), or the corresponding sliding groove H31 is arranged on the inner surface F13 of the upper cover 231 (not shown). The transverse direction refers to a direction substantially perpendicular to the moving direction Ds of the relative displacement of the supporting plate 15 and the main casing 23A. In some embodiments, the limiting structure 235 may be a stop block protruding from a side surface of the cylinder serving as the slider B11, as shown in FIG. 9.

In some embodiments, referring to FIG. 1, FIG. 2, and FIG. 7, the host casing 13 may further include a telescopic section 23C. The telescopic section 23C is coupled between the connection side edge S11 of the main casing 23A and the rear cover 23B. When the rear cover 23B is detached from the main casing 23A, the telescopic section 23C can provide an effect of covering an opening formed between the rear cover and the main casing.

Specifically, in the closed state, the telescopic section 23C may be retracted in the main casing 23A and/or the rear cover 23B. In other words, in the closed state, the clamshell electronic device case 10 does not expose the telescopic section 23C, that is, the telescopic section 23C is not visible in the appearance of the clamshell electronic device case 10. On the contrary, in the opened state, the rear cover 23B can be detached from the main casing 23A through extension of the telescopic section 23C, so that the telescopic section 23C is exposed between the main casing 23A and the rear cover 23B. In other words, in the opened state, the clamshell electronic device case 10 exposes the telescopic section 23C, that is, the telescopic section 23C is visible in the appearance of the clamshell electronic device case 10.

In some embodiments, referring to FIG. 1, FIG. 2, FIG. 7, and FIG. 8, the clamshell electronic device case 10 may further include a linkage structure 17. The linkage structure 17 is fixed to the main casing 23A and the cover 11, and is connected to the supporting plate 15. The linkage structure 17 is configured to drive, in response to the opening of the cover 11 with respect to the main casing 23A, the supporting plate 15 to move in a direction away from the connection side edge S11 of the main casing 23A through the outer side edge S31 of the supporting plate, and drive, in response to the closing of the cover 11 and the main casing 23A, the supporting plate 15 to move in a direction close to the connection side edge S11 of the main casing 23A through the outer side edge S31 of the supporting plate.

Specifically, the rear cover 23B has a connection side edge S41 and a free side edge S43 that are opposite to each other. In the closed state, the connection side edge S41 of the rear cover 23B is adjacent to the connection side edge S41 of the main casing 23A, that is, a distance between the connection side edge S41 of the rear cover 23B and the connection side edge S41 of the main casing 23A is substantially zero.

When the rear cover 23B is flipped outward (opened) with respect to the main casing 23A from the closed state such that the cover 11 stands on the main casing 23A at a predetermined included angle αr (hereinafter referred to as a first angle), the linkage structure 17 drives the supporting plate 15 to translate outward with respect to the main casing 23A with the flipping of the cover 11, thereby pushing the rear cover 23B sleeved on the outer side edge S31 of the supporting plate 15 in a direction away from the main casing 23A. In other words, the connection side edge S41 of the rear cover 23B is detached from the connection side edge S41 of the main casing 23A, and the distance between the connection side edge S41 of the rear cover 23B and the connection side edge S41 of the main casing 23A gradually increases. The first angle may be, for example, in a range of 90±10∘, but is not limited thereto. The first angle may be determined based on usage habits of users in the expected market.

On the contrary, in the process of the rear cover 23B flipping inward (closing) with respect to the main casing 23A from the opened state until the cover 11 is superimposed on the main casing 23A (that is, until the cover is in the closed state), the linkage structure 17 drives the supporting plate 15 to translate inward with respect to the main casing 23A with the flipping of the cover 11, thereby pulling back the rear cover 23B sleeved on the outer side edge S31 of the supporting plate 15 in a direction close to the main casing 23A. In other words, the connection side edge S41 of the rear cover 23B gradually approaches the connection side edge S41 of the main casing 23A (that is, the distance between the two connection side edges gradually decreases).

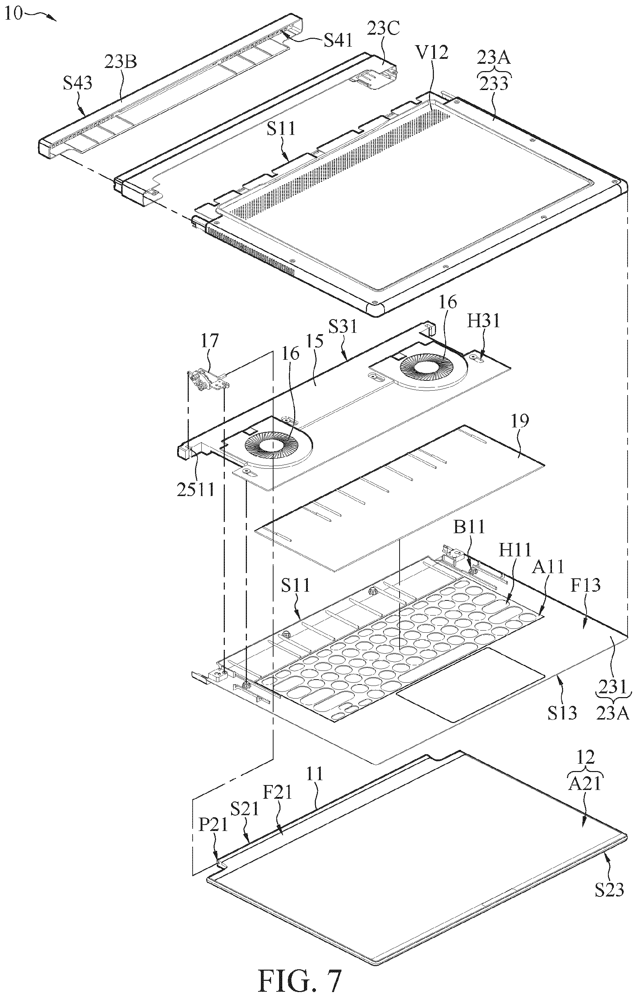

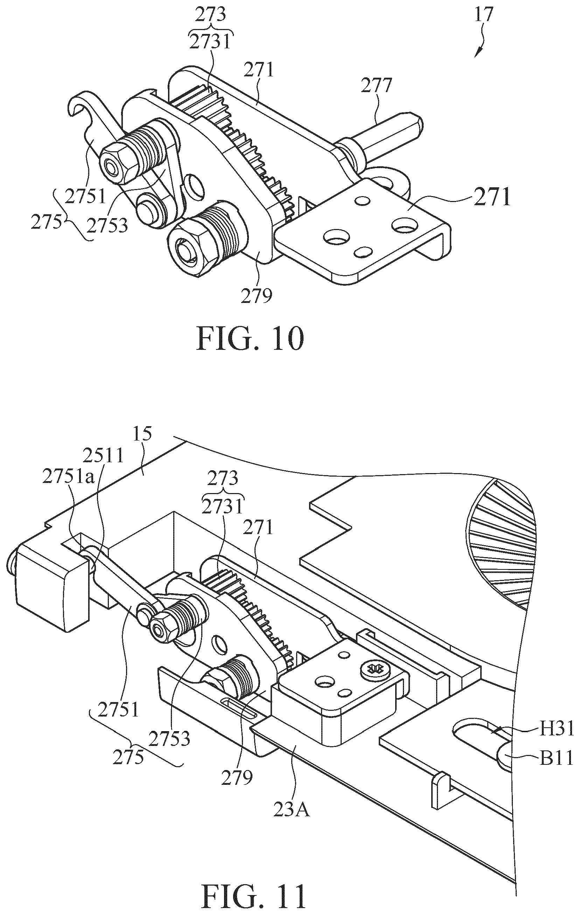

In some embodiments, referring to FIG. 7, FIG. 8, and FIG. 10, the linkage structure 17 includes a base 271, a gear assembly 273, a link assembly 275, and a rotating shaft 277. The base 271 is fixed (that is, locked) to the main casing 23A. The gear assembly 273 is arranged on the base 271. The link assembly 275 connects the gear assembly 273 to the supporting plate 15. The rotating shaft 277 is arranged to extend through the base 271. In addition, one end of the rotating shaft 277 is fixedly connected to a pivot joint P21 (that is, a position where the cover is pivotally connected to the host casing 13) of the cover 11, and the other end is fixed to the gear assembly 273. In some embodiments, referring to FIG. 10 and FIG. 11, the gear assembly 273 is composed of a plurality of gears 2731 that are engaged in sequence, and the gears 2731 may have the same size or different sizes. In some embodiments, referring to FIG. 10 and FIG. 11, the link assembly 275 may be composed of a single link 2751 or a plurality of links 2751 and 2753 connected in sequence. During use of the plurality of links 2751 and 2753, the links 2751 and 2753 can be connected to each other in such a way that they are fixed, rotatable, and/or displaceable with respect to each other, or the like, and respective lengths of the links 2751 and 2753 may be the same or different.

Herein, the rotating shaft 277 can synchronously drive, in response to the flipping of the cover 11, the link assembly 275 by rotating the gear assembly 273, so that the supporting plate 15 can translate with respect to the main casing 23A. In other words, the link assembly 275 can drive, in response to the rotation of the gear assembly 273, the supporting plate 15 to translate with respect to the main casing 23A.

Specifically, when the rear cover 23B is flipped outward with respect to the main casing 23A from the closed state (that is, transitions to the opened state), the rear cover 23B synchronously rotates the rotating shaft 277 in a forward direction, and the rotating shaft 277 synchronously rotates the gear assembly 273, so that the gear assembly 273 applies a force in a first direction to the link assembly 275. Therefore, the plurality of links 2751 and 2753 of the driving link assembly 275 change from a configuration state in which they are retracted with respect to each other to a configuration state in which they are extended in sequence, that is, a distribution distance of the link assembly 275 increases, as shown in FIG. 11. In this case, with the transition of the configuration state of the link assembly 275 changes, an end of the link assembly 275 moves outward (that is, in a direction away from the main casing 23A), thereby pushing the supporting plate 15 connected to the end of the link assembly 275 outward (that is, in a direction away from the main casing 23A).

On the contrary, when the rear cover 23B is flipped inward with respect to the main casing 23A from the opened state (that is, transitioning to the opened state), the rear cover 23B also synchronously rotates the rotating shaft 277 in a reverse direction, and the rotating shaft 277 synchronously rotates the gear assembly 273, so that the gear assembly 273 applies a force in a second direction to the link assembly 275. Therefore, the plurality of links 2751 and 2753 of the driving link assembly 275 change from the configuration state in which they are extended in sequence to the configuration state in which they are retracted with respect to each other, that is, a distribution distance of the link assembly 275 decreases, as shown in FIG. 10. In this case, with the transition of the configuration state of the link assembly 275 changes, an end of the link assembly 275 moves inward (that is, in a direction away from the main casing 23A), thereby pulling back the supporting plate 15 connected to the end of the link assembly 275 inward (that is, in a direction away from the main casing 23A). The first direction is opposite to the second direction.

In some embodiments, referring to FIG. 8 and FIG. 11, the linkage structure 17 may further include a stop assembly 279. The stop assembly 279 is connected to the rotating shaft 277. The stop assembly 279 can cut off, in response to rotation of the rotating shaft 277 until the cover 11 is opened at a first angle (that is, the included angle αr reaches the first angle) with respect to the main casing 23A, the connection between the link assembly 275 and the rotating shaft 277, to stop the synchronous driving of the link assembly 275.

In other words, when the cover 11 is flipped outward (that is, the included angle αr gradually increases from zero) with respect to the main casing 23A from the closed state (that is, the included angle αr is about zero), the gear assembly 273 rotates with synchronous rotation of the rotating shaft 277 by the cover 11 and applies a force to the link assembly 275 until the included angle αr reaches the first angle. When the angle αr reaches the first angle, the stop assembly 279 cuts off the connection between the link assembly 275 and the rotating shaft 277. For example, the stop assembly 279 pushes away the link assembly 275 (or one of two gears 2731 meshed in the gear assembly 273), so that the link assembly 275 moves away from the gear assembly 273 (or one of the two gears 2731 that were originally meshed with each other is separated from the other). Therefore, even if the cover 11 continues to flip outward (that is, the included angle αr is greater than the first angle), the gear assembly 273 cannot apply the force to the link assembly 275 with the synchronous rotation of the rotating shaft 277 by the cover 11, so that the link assembly 275 does not perform any action, that is, the configuration state of the link assembly no longer changes accordingly. In some embodiments, the first angle may be about 90°.

In some embodiments, the stop assembly 279 may be a cam structure, as shown in FIG. 9. For example, the cam structure as the stop assembly 279 may be a disk-shaped plate body rotating around a fixed axis and having a variable diameter. A periphery of the disk-shaped plate body may be divided into a first section having a fixed diameter and a second section having a variable diameter. The second section relates to the first angle. For example, the included angle involved in the second section is equal to the first angle or a specific multiple of the first angle.

In some embodiments, the base 271 can be locked on the inner surface F13 of the main casing 23A by fasteners such as rivets or screws. For example, the base 271 may be divided into two blocks (hereinafter referred to as a first block and a second block). The gear assembly 273, the link assembly 275, the rotating shaft 277, and the stop assembly 279 are assembled on the first block of the base 271, and the second block of the base 271 is fixed to the inner surface F13 of the upper cover 231 of the main casing 23A.

In some embodiments, referring to FIG. 11, the link 2751 connected to the supporting plate 15 in the link assembly 275 may be coupled with the supporting plate 15 in a snap-fit manner, so that the link assembly 275 may be coupled with the supporting plate 15 through relative rotation. For example, an end of the link 2751 is a snap (for example, a fastening hook 2751a), and a corresponding position of the supporting plate 15 is provided with a fastener (for example, a cross bar 2511).

In some embodiments, the rotating shaft 277 may be arranged to extend through a hole (for example, a section of an annular side wall of the hole is flat) with a limiting member on the cover 11 (not shown), so as to rotate synchronously with the cover 11.

In some embodiments, referring to FIG. 7 and FIG. 8, the clamshell electronic device case 10 may further include at least one heat dissipation module 16, and each heat dissipation module 16 is embedded in the supporting plate 15. In some embodiments, the heat dissipation module 16 may include a fan, fins, or a combination thereof.

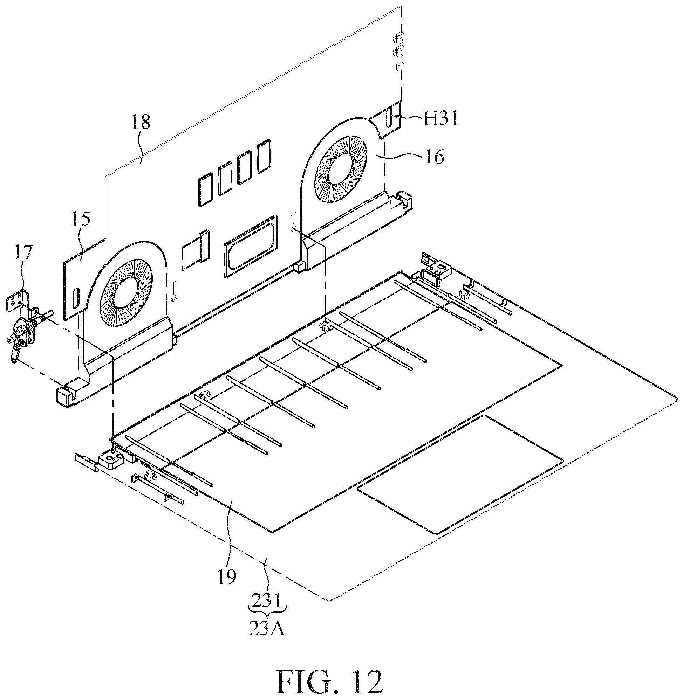

In some embodiments, referring to FIG. 12, the clamshell electronic device case 10 may further include a motherboard 18, and the motherboard 18 is fixed to the supporting plate 15.

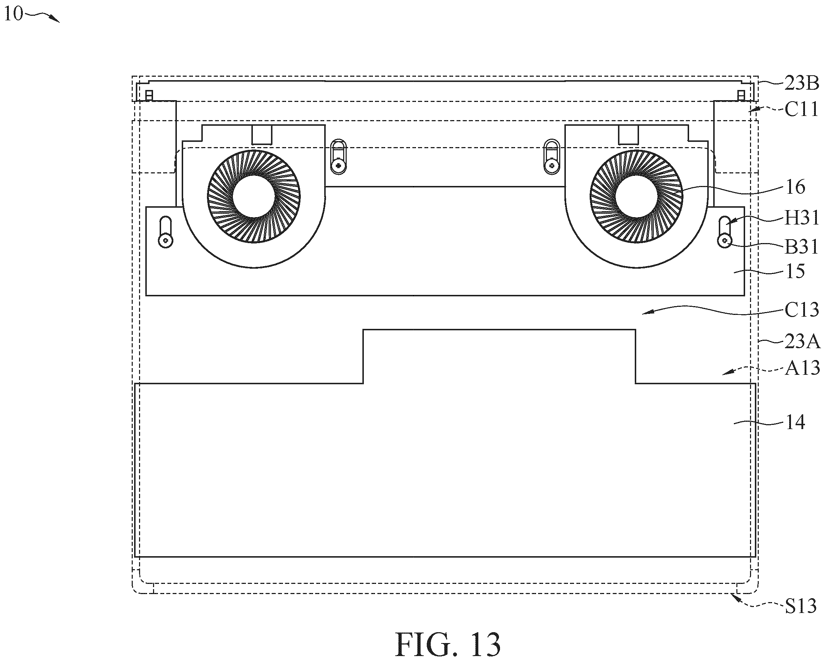

In this way, when the supporting plate 15 moves toward an outer side of the main casing 23A with respect to the upper cover 231 of the main casing 23A, the supporting plate 15 moves toward the outer side of the main casing 23A together with the motherboard 18, so that an exposed area C11 of the heat dissipation module 16 is generated (as shown in FIG. 13) to increase a contact area between the fins of the heat dissipation module 16 and air.

Furthermore, when the supporting plate 15 moves outward (that is, moves toward the outside of the main casing 23A), the heat dissipation module 16 is further enabled to be misaligned with another part (such as a battery module 14), to increase an air suction space and further increase the heat dissipation area. In other words, in a connection state (that is, in the opened state) in which the main casing 23A and the rear cover 23B are detached from each other, a clearance area C13 is formed between the motherboard 18 (or the supporting plate 15) and a receiving area A13 (as shown in FIG. 13).

In some embodiments, a receiving area A13 for arrangement of the battery module 14 is defined in the main casing 23A and adjacent to the free side edge S13. In a connection state (that is, a closed state) in which the main casing 23A and the rear cover 23B are connected to each other, a sum of an overlapping area of the supporting plate 15 and the main casing 23A and an overlapping area of the receiving area A13 and the main casing 23A is less than or equal to a projected area of the main casing 23A.

In some embodiments, referring to FIG. 2, FIG. 7, FIG. 8, and FIG. 12, the clamshell electronic device case 10 may further include a keyboard module 19. The keyboard module 19 is located between the upper cover 231 and the supporting plate 15. The upper cover 231 further has at least one perforation H11 provided in the keyboard area A11. The keyboard module 19 has a plurality of keycaps 191, and the keycaps 191 are arranged to extend through the perforations H11 on the upper cover 231, as shown in FIG. 2.

In some embodiments, referring to FIG. 2 and FIG. 7, the lower cover 233 and/or the rear cover 23B of the main casing 23A may be provided with a plurality of air holes V12 and/or V11 for air circulation, so as to improve the heat dissipation effect.

In some embodiments, the fan of the heat dissipation module 16 embedded in the supporting plate 15 can be substantially aligned with the air hole V12 on the lower cover 233.

In some embodiments, referring to FIG. 3 to FIG. 6 and FIG. 14, the first part 13A is a sliding casing 33A, and the second part 13B is a main casing 33B. During application, functional components of a clamshell electronic device are arranged in the main casing 33B. The main casing 33B has a connection side edge S11 and a free side edge S13 opposite to each other. The cover 11 has a connection side edge S21 and a free side edge S23 opposite to each other. The cover 11 can be pivotally connected to the connection side edge S11 of the main casing 33B through the connection side edge S21, and therefore can rotate with respect to the host casing 13 with the connection side edge S11 (or S21) as the rotating shaft, to transition between opening and closing.

An internal space of the main casing 33B is the accommodating space of the host casing 13. The supporting plate 15 is located in the accommodating space and is fixed to an inner surface F13 of the main casing 33B. A front outer surface F11 of the main casing 33B is provided with a keyboard area A11. The sliding casing 33A is located on a side (that is, opposite to the front outer surface F11, the sliding casing 33A is adjacent to the inner surface F13 of the main casing 33B) of the main casing 33B opposite to the front outer surface F11, and slidably connected to the main casing 33B.

In other words, a connection state of the sliding casing 33A to the main casing 33B transitions between separation and connection with each other in response to translation of the sliding casing 33A with respect to the supporting plate 15.

In some embodiments, referring to FIG. 3 to FIG. 6 and FIG. 14, the main casing 33B includes an upper cover 331 having a keyboard area A11, an upper-side lower cover 333, and a middle-section lower cover 335 having a plurality of air holes V13. In some embodiments, the air holes V13 on the middle-section lower cover 335 may be arranged in a column along the connection side edge S11. Each air hole V13 is in a shape of long strips, and each long strip-shaped air hole V13 extends in a direction perpendicular to the connection side edge S11. In some embodiments, the upper-side lower cover 333 may be also provided with a plurality of air holes V15, and the air holes V15 may be arranged in a column along the connection side edge S11. Each air hole V15 is in a shape of long strips, and each long strip-shaped air hole V15 extends in a direction perpendicular to the connection side edge S11.

Herein, referring to FIG. 3 to FIG. 6, FIG. 14, and FIG. 15, a left side edge S123 and a right side edge S143 of the upper-side lower cover 333 are fixedly connected to a left side edge S121 and a right side edge S141 of the upper cover 331 respectively, and an upper side edge S113 of the upper-side lower cover 333 and an upper side edge S111 of the upper cover 331 jointly form a connection side edge S11. Specifically, after the upper side edge S113 of the upper-side lower cover 333 is fixed to the upper side edge S111 of the upper cover 331, the upper side edge S113 of the upper-side lower cover 333 and the upper side edge S111 of the upper cover 331 overlap and jointly form the connection side edge S11 of the main casing 33B.

The upper side edge of the middle-section lower cover 335 is fixedly connected to a lower side edge of the upper-side lower cover 333, that is, the upper side edge and the lower side edge overlap to form a wire S15. Specifically, the middle-section lower cover 335 does not completely overlap with the upper-side lower cover 333, and the upper side edge of the middle-section lower cover 335 is fixed below the lower side edge of the upper-side lower cover 333. A left side edge S125 and a right side edge S145 of the middle-section lower cover 335 are fixedly connected to the left side edge S121 and the right side edge S141 of the upper cover 331 respectively. A lower side edge S17 of the middle-section lower cover 335 is suspended, that is, not fixed to another casing component.

The sliding casing 33A includes a lower-side lower cover 337 and an extension cover plate 339. A left side edge S127 and a right side edge S147 of the lower-side lower cover 337 are slidably connected to the left side edge S121 and the right side edge S141 of the upper cover 331, and an upper side edge S19 of the lower-side lower cover 337 matches and is detachably connected to the lower side edge (that is, the wire S15) of the upper-side lower cover 333. A lower side edge S135 of the extension cover plate 339 is engaged with a lower side edge S133 of the lower-side lower cover 337, and a left side edge S129 and a right side edge S149 of the extension cover plate 339 are fixedly connected to the left side edge S127 and the right side edge S147 of the lower-side lower cover 337 respectively. When the extension cover plate 339 is received in the accommodating space, a lower side edge of the extension cover plate 339, the lower side edge S133 of the lower-side lower cover 337, and a lower side edge S131 of the upper cover 331 overlap together and jointly form a free side edge S13 of the main casing 33B.

The upper-side lower cover 333 is located in the same plane as the lower-side lower cover 337, but is located in a different plane from the middle-section lower cover 335.

When the lower-side lower cover 337 is folded with respect to the main casing 33B, the upper side edge S19 of the lower-side lower cover 337 is attached to the lower side edge of the upper-side lower cover 333. In this case, the upper-side lower cover 333 is engaged with the lower-side lower cover 337 to form a lower cover of the host casing 13, and an accommodating space of the host casing 13 is formed between the lower cover and the upper cover 331. In some embodiments, the lower-side lower cover 337 may be provided with a plurality of air holes V17, and the air holes V17 may be arranged in a column along the connection side edge S11. Each air hole V17 is in a shape of long strips, and each long strip-shaped air hole V17 extends in a direction perpendicular to the connection side edge S11.

In the connection state of detachment from each other, the sliding casing 33A is slid open with respect to the main casing 33B to expose the extension cover plate 339, and the upper side edge S19 of the lower-side lower cover 337 is separated from the lower side edge (that is, the wire S15) of the upper-side lower cover 333 to expose the middle-section lower cover 335.

In the connection state of connection with each other, the sliding casing 33Ais retracted with respect to the main casing 33B to receive the extension cover plate 339 in the accommodating space, and the upper side edge S19 of the lower-side lower cover 337 and the lower side edge (that is, the wire S15) of the upper-side lower cover 333 are connected to each other to cover the middle-section lower cover 335.

Therefore, during application, a user may selectively slide open the lower-side lower cover 337 based on a usage state of the clamshell electronic device, so as to increase the number of exposed air holes V13 and further improve the heat dissipation effect. For example, when the clamshell electronic device is running high-power program software, the lower-side lower cover 337 is slid open to increase the air holes V13, thereby improving the heat dissipation effect.

In some embodiments, referring to FIG. 3 to FIG. 6, FIG. 15, and FIG. 16, the clamshell electronic device case 10 may further include a linkage structure 17. The linkage structure 17 is fixed to the cover 11, the supporting plate 15, and the sliding casing 33A, and is configured to enable, in response to the cover 11 being closed (that is, in a closed state) with respect to the main casing 33B, the sliding casing 33A to slide and be retracted with respect to the main casing 33B.

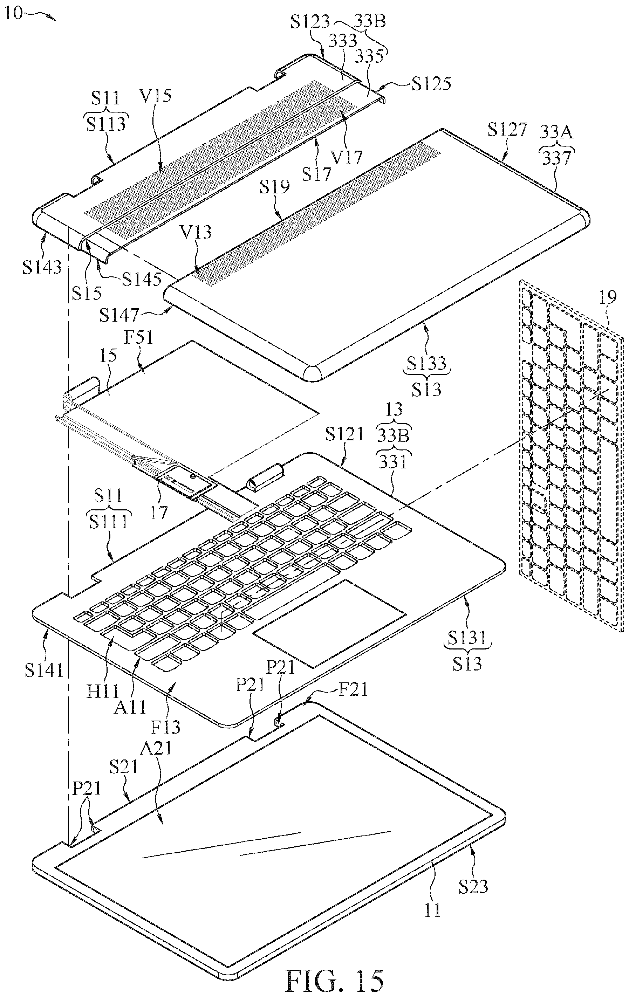

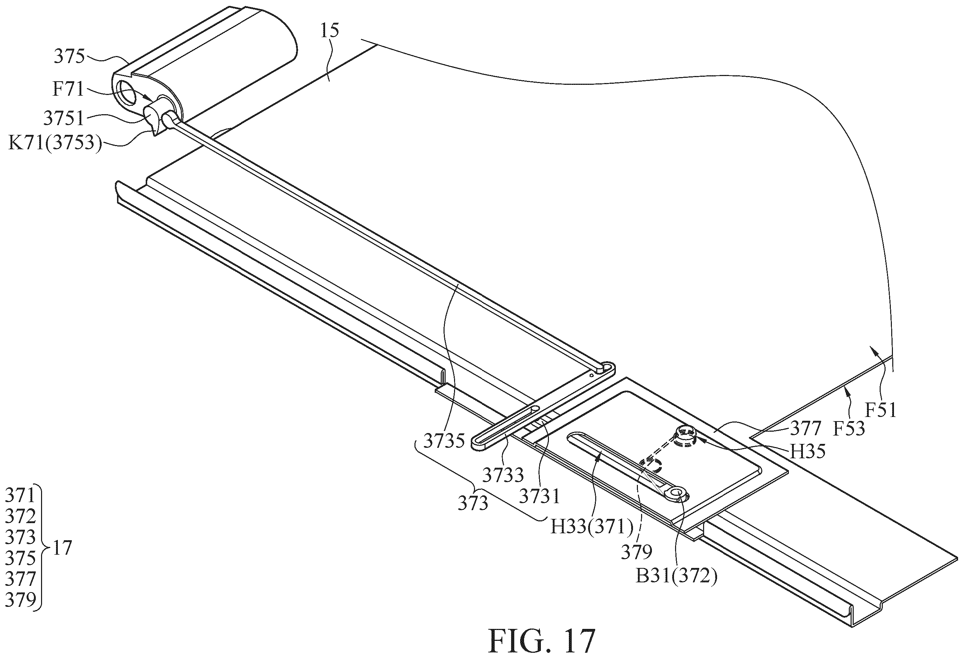

In some embodiments, referring to FIG. 15 to FIG. 17, the linkage structure 17 may include a sliding groove 371, a slider 372, a link assembly 373, and a linkage rotating shaft 375. The sliding groove 371 is provided on one of the sliding casing 33A and the supporting plate 15. The slider 372 is arranged on the other of the sliding casing 33A and the supporting plate 15 and arranged to extend through the sliding groove 371. The link assembly 373 is fixedly connected to one of the slider 372 and the sliding groove 371. The linkage rotating shaft 375 is fixedly connected to the pivot joint P21 of the cover 11. Herein, the linkage rotating shaft 375 is configured to enable relative displacement of the sliding groove 371 and the slider 372 through the link assembly 373 in response to flipping of the cover 11. In other words, the linkage rotating shaft 375 is synchronously driven to rotate during rotation of the cover 11.

In some embodiments, the linkage structure 17 further includes a sliding cover plate 377. The sliding cover plate 377 is fixed to the lower-side lower cover 337 of the sliding casing 33A. The sliding groove 371 is an elongated through hole H33 in the sliding cover plate 377, and the slider 372 is a bump B31 fixed to the supporting plate 15. In this case, the slider 372 can slide in the elongated through hole H33, thereby driving the sliding casing 33A and the supporting plate 15 to generate relative displacement.

In some embodiments, the link assembly 373 may be a single link, or may be composed of a plurality of links 3731, 3733, and 3735 connected in sequence. During use of the plurality of links 3731, 3733, and 3735, the links 3731, 3733, and 3735 can be connected to each other in such a way that they are fixed, rotatable, and/or displaceable with respect to each other, and respective lengths of the links 3731, 3733, and 3735 may be the same or different.

For example, the plurality of links 3731, 3733, and 3735 are used as an example. The link 3731 is locked to a surface (hereinafter referred to as a first surface F51) of the supporting plate 15 adjacent to the sliding casing 33A. A surface of a side of the supporting plate 15 opposite to the first surface F51 (hereinafter referred to as a second surface F53) is adjacent to the inner surface F13 of the upper cover 331. A bump B31 (serving as a slider 372) protrudes from one end of the link 3731 toward the sliding cover plate 377, and the bump B31 extends into and passes through the elongated through hole H33 (serving as a sliding groove 371) on the sliding casing 33A. A radius of the bump B31 may be slightly less than a width of the sliding groove 371, so that the bump B31 can slide back and forth between two ends of the elongated through hole H33.

The other end of the link 3731 is connected to one end of the link 3733. In this example, another elongated through hole extending through a rod body and extending along the rod body is formed on one end of the link 3733, and the other end of the link 3731 also protrudes toward the link 3733 and extends into another bump in the elongated through hole on the link 3733. In other words, the other end of the link 3731 is connected to one end of the link 3733 in such a way that they are displaceable and rotatable with respect to each other. Therefore, the other end of the link 3731 and one end of the link 3733 can generate relative displacement and/or relative rotation due to an external force applied to the link assembly 373.

The other end of the link 3733 is connected to one end of the link 3735. In this example, a hole extending through the rod body is also formed on the other end of the link 3733, and one end of the link 3735 protrudes toward the link 3733 and extends into another bump in the hole on the link 3733 and with a shape matching a contour of the hole. In other words, the other end of the link 3733 is connected to one end of the link 3735 in such a way that they are rotatable with respect to each other. Therefore, the other end of the link 3733 and one end of the link 3735 can generate relative rotation due to an external force applied to the link assembly 373.

When the linkage rotating shaft 375 rotates within a specific angle range (that is, a rotation angle falls within the specific angle range), the linkage rotating shaft 375 is connected to the other end of the link 3735. On the contrary, when the linkage rotating shaft 375 rotates within an angle range outside the specific angle range (that is, a rotation angle falls outside the specific angle range), the linkage rotating shaft 375 is not connected to the other end of the link 3735. In other words, when the linkage rotating shaft 375 rotates within the specific angle range, the linkage rotating shaft 375 applies an external force to the other end of the link 3735 due to the rotation, so as to drive the links 3731, 3733, and 3735 to generate corresponding relative displacement and/or relative rotation, and then drive the link 3731 to slide in the elongated through hole H33 of the sliding casing 33A. The rotation angle described herein is an initial angle (that is, the rotation angle is zero) when the cover 11 is closed with respect to the main casing 33B (that is, in the closed state), and when the cover 11 is opened with respect to the main casing 33B, the rotation angle gradually increases from zero as the included angle αr between the cover 11 and the main casing 33B gradually increases.

In some embodiments, the linkage rotating shaft 375 may be connected to the other end of the link 3735 through a pushing member 3753. For example, a toggle K71 serving as the pushing member 3753 is arranged on a side wall F71 of a rotating shaft body 3751 of the linkage rotating shaft 375.

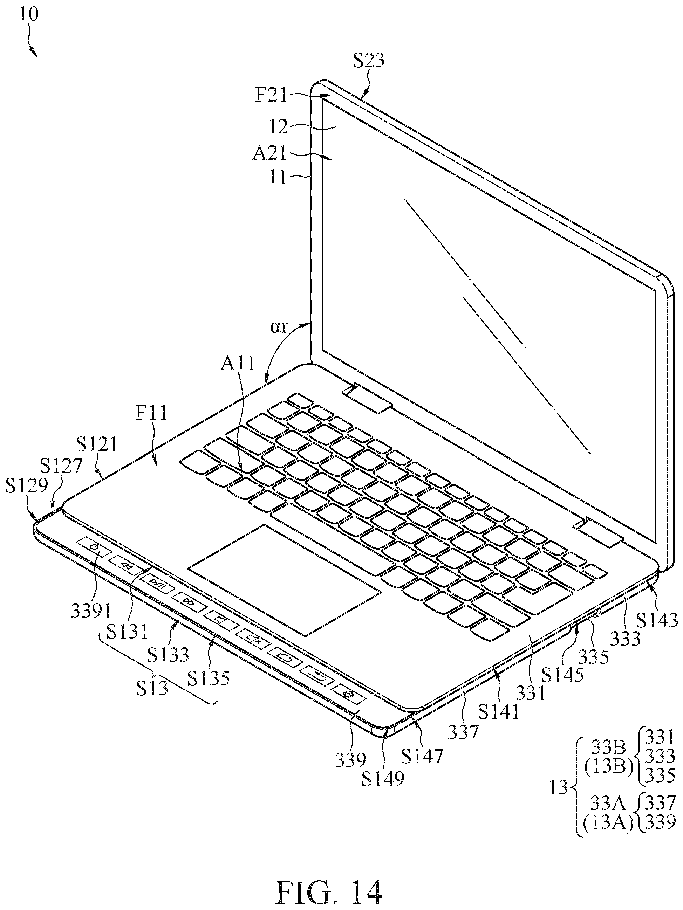

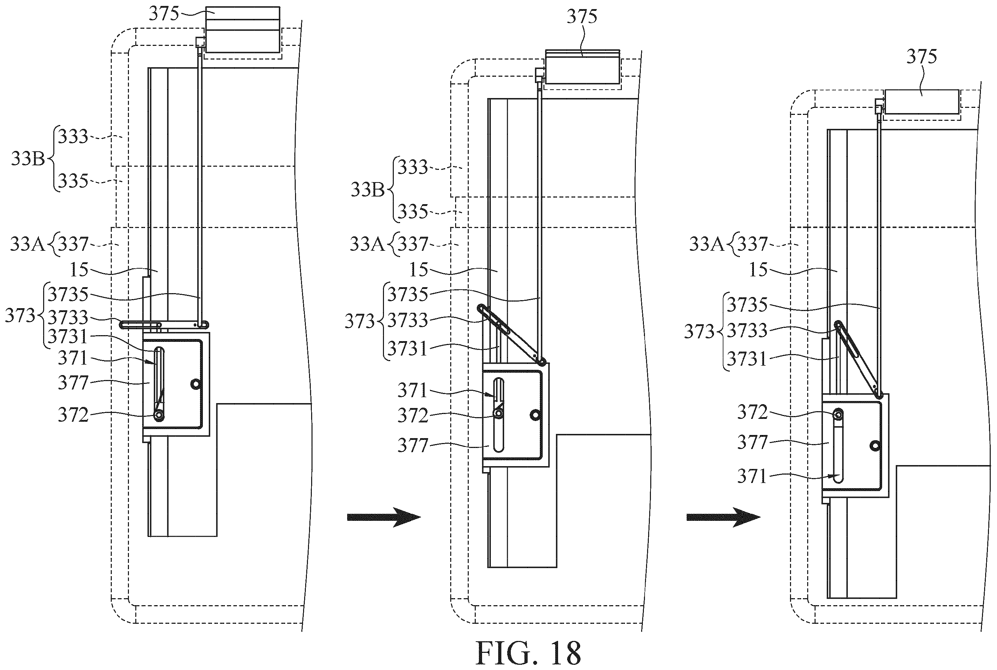

Referring to FIG. 14 and FIG. 18, when the cover 11 is opened at a predetermined angle (hereinafter referred to as a second angle) with respect to the main casing 33B, the toggle K71 is just attached to the other end of the link 3735. In this case, the toggle K71 touches the other end of the link 3735, but does not apply a pushing force to the other end of the link 3735. In addition, the slider 372 stays at one end of the sliding groove 371.

Therefore, when the cover 11 is closed at the rotation angle greater than the second angle, the sliding casing 33A does not perform any action (that is, the sliding casing does not slide to prevent the extension cover plate 339 from being covered by the main casing 33B) before the rotation angle reaches the second angle. Moreover, when the cover 11 is closed until the included angle αr between the cover and the main casing 33B is equal to or less than the second angle, the toggle K71 rotates against the other end of the link 3735 due to the linkage rotating shaft 375 rotating with the cover 11, so as to apply a pushing force to the other end of the link 3735, so that the link assembly 373 is synchronously linked, and the relative displacement of the sliding groove 371 and the slider 372 is enabled through the linkage of the link assembly 373. That is, the slider 372 slides from one end of the sliding groove 371 to the other end of the sliding groove 371, thereby pulling the sliding casing 33A back to the initial state of engaging the upper cover 331 with the upper-side lower cover 333 (that is, returning to the closed state where the sliding casing 33A completely overlaps with the main casing 33B), as shown in FIG. 18.

In some embodiments, the second angle may be designed to be less than or equal to 90°. The second angle may be designed to be less than 90, so as to prevent unexpected small angle closure of the cover 11 with respect to the main casing 33B from triggering automatic retraction of the sliding casing 33A. For example, assuming that a normal state is to use the clamshell electronic device in the opened state in which the included angle αr between a screen (that is, the cover 11) and a host (that is, the main casing 33B) is greater than or equal to 90°, the second angle may be designed to be about 72°. In this case, when the included angle αr between the screen and the host is slightly less than 90° (but still greater than 72°) due to accidental touch of the screen, the sliding casing 33A does not automatically retracts. However, when the screen is closed to 0° without using the clamshell electronic device, the sliding casing 33A automatically retracts to return to the initial state.

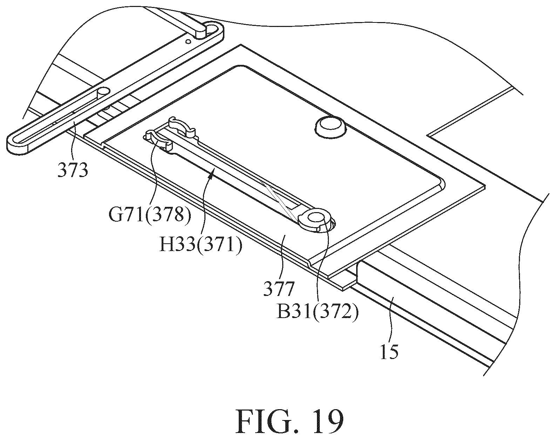

In some embodiments, referring to FIG. 19, the linkage structure 17 further includes two elastic stop assemblies 378. The two elastic stop assemblies 378 are respectively located on two ends of the sliding groove 371 and configured to produce a limiting stop effect on the slider 372.

In some embodiments, each elastic stop assembly 378 may be a clamping member G71. The clamping member G71 may be composed of two elastic arc-shaped sheets. The two elastic arc-shaped sheets of each clamping member G71 are respectively arranged at two opposite side edges of any end of the sliding groove 371 in positions with opposite inner recesses, so that a limiting space is formed between the two elastic arc-shaped sheets. A shortest distance between adjacent ends of arc-shaped peripheries of two elastic arc-shaped members of the same clamping member G71 is slightly less than the maximum width (such as a diameter) of the slider 372. Therefore, when the slider 372 slides to any end of the sliding groove 371, the slider 372 may slide into the limiting space of the clamping member G71 from between the adj acent ends of the arc-shaped peripheries of the two elastic arc-shaped sheets. Therefore, when the slider 372 is not subjected to a sufficient pushing force to enable deformation of the two elastic arc-shaped sheets of the clamping member G71, the slider 372 is clamped by the clamping member G71 and therefore does not slide in the sliding groove 371.

On the contrary, when the slider 372 receives a pushing force sufficient to deform the two elastic arc-shaped sheets of the clamping member G71 through the link assembly 373, the slider 372 is pushed out of the two elastic arc-shaped sheets of the clamping member G71 due to the pushing force, and therefore slides out of the limiting space of the clamping member G71 and slides toward the other end of the sliding groove 371.

In some embodiments, the linkage structure 17 further includes a restoring member 379. The restoring member 379 connects the sliding casing 33A (for example, the lower-side lower cover 337) and the supporting plate 15. The restoring member 379 is configured to provide an actuating effect of relative displacement of the sliding casing 33A and the supporting plate 15 when the linkage rotating shaft 375 is flipped in response to the cover 11.

In some embodiments, the restoring member 379 may be a spring, and two ends of the spring are directly or indirectly fixed to the sliding casing 33A (for example, the lower-side lower cover 337) and the supporting plate 15 respectively.

For example, one end of the spring is fixed to the sliding cover plate 377, and the sliding cover plate 377 is locked and attached to the lower-side lower cover 337 through a locking hole H35 thereon. The other end of the spring is fixed to the slider 372, and the slider 372 is locked and attached to the supporting plate 15 through the link 3731.

In some embodiments, the elastic stop assembly 378 and the restoring member 379 may be used alone or in combination.

In some embodiments, after the linkage rotating shaft 375 drives the slider 372 to disengage from the elastic stop assembly 378 through the link assembly 373 in response to the flipping of the cover 11, the restoring member 379 provides the actuating effect of the relative displacement of the sliding casing 33A and the supporting plate 15. Specifically, after the slider 372 is detached from the elastic stop assembly 378, the restoring member 379 continues to pull (or push) the slider 372 toward the other end of the sliding groove 371.

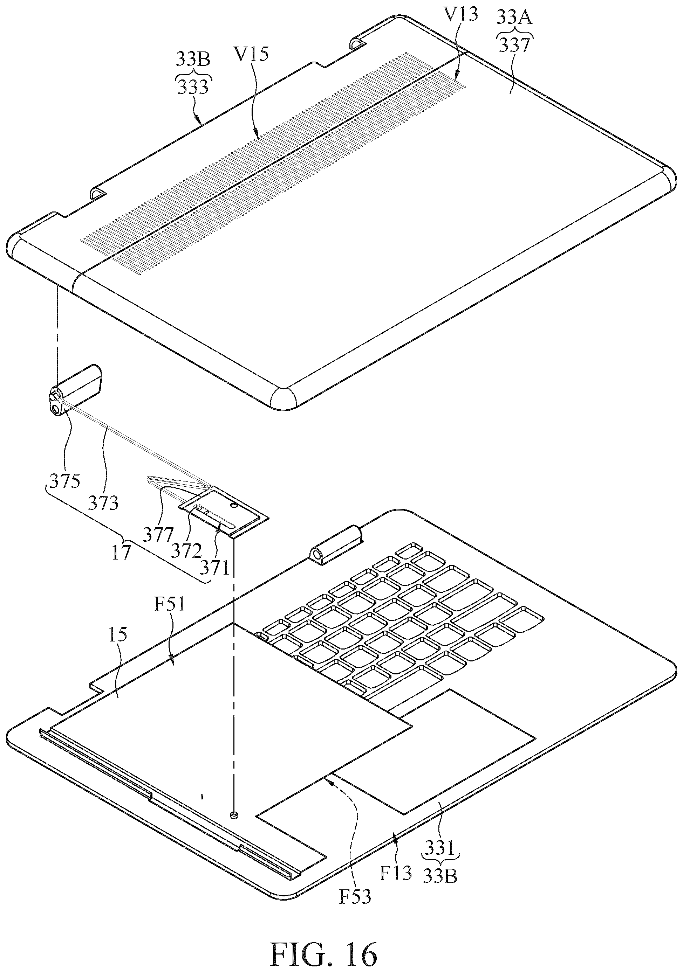

It should be clear that although FIG. 15 and FIG. 16 show that the sliding groove 371 is fixed to the lower-side lower cover 337 of the sliding casing 33A through the sliding cover plate 377 and the slider 372 is fixed to the supporting plate 15 through the link 3731, a person skilled in the art should be able to reversely arrange the components according to the same actuating principle as that in this implementation, which means that the arrangement may be changed to one in which the sliding groove 371 is arranged on the supporting plate 15 and the slider 372 is arranged on the sliding casing 33A. Therefore, the arrangement is not shown separately. For example, the sliding cover plate 377 is locked to the supporting plate 15. The link 3731 is slidably sandwiched between the sliding cover plate 377 and the supporting plate 15, and the other end of the link 3731 exceeds the sliding cover plate 377 (that is, the link 3731 is longer than the sliding cover plate 377) to connect to one end of the link 3733. The slider 372 on one end of the link 3731 extends through the sliding groove 371 and is locked to the lower-side lower cover 337 of the sliding casing 33A.

In some embodiments, in addition to designing the sliding casing 33A to automatically retract, the sliding casing 33A may also be designed to be manually retracted.

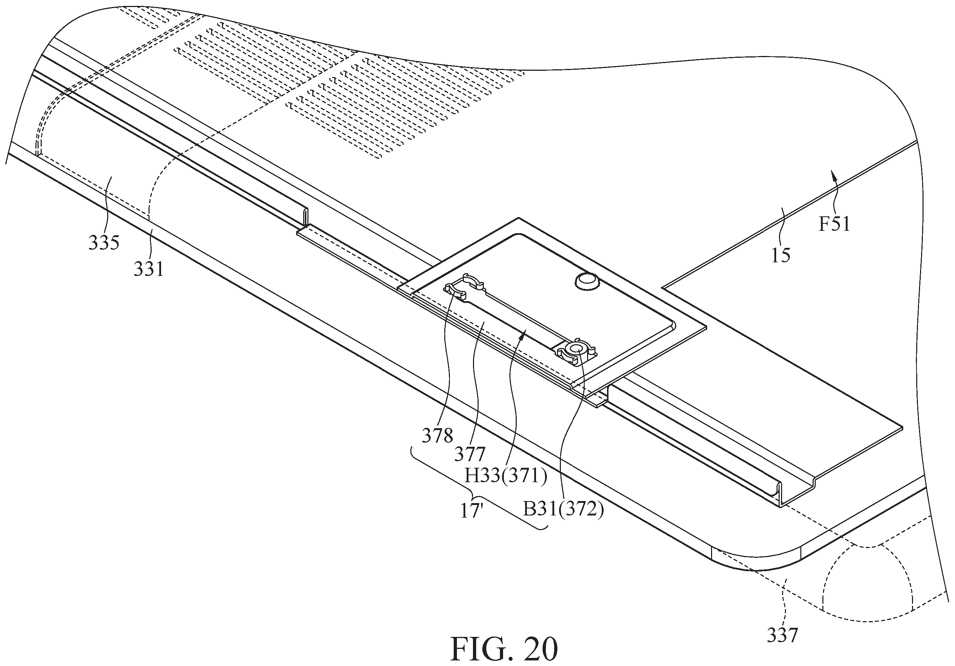

In some embodiments, the link assembly 373 in the clamshell electronic device case 10 of the above embodiment is removed (as shown in FIG. 20), so that the retraction manner of the sliding casing 33A can be changed from automatic retraction to manual retraction.

Specifically, the linkage structure 17 shown in FIG. 15 is replaced by a guide assembly 17', as shown in FIG. 20. Referring to FIG. 20, herein, the guide assembly 17' is fixed to the sliding casing 33A and the supporting plate 15, and is configured to provide the actuating effect of the relative displacement of the sliding casing 33A and the supporting plate 15. Specifically, the guide assembly 17' is configured to enable (or disable) the relative displacement of the sliding casing 33A and the supporting plate 15 and guide a direction of the relative displacement. The guide assembly 17' does not have a link assembly 373, that is, the guide assembly 17' does not move as the cover 11 is flipped with respect to the host casing 13.

In some embodiments, the guide assembly 17' includes a sliding groove 371 and a slider 372, and the arrangement and actuation of the sliding groove 371 and the slider 372 are substantially the same as those described above. Therefore, the details are not described again. For the manual folding structure, except for the link assembly 373, the linkage rotating shaft 375 is still retained, and the linkage rotating shaft 375 is simply configured to realize the pivotal connection between the cover 11 and the host casing 13.

In addition, the restoring member 379 and/or the elastic stop assembly 378 may be selectively arranged based on application requirements. In some embodiments, the guide assembly 17' may further include an elastic stop assembly 378 and/or a restoring member 379, and the configuration and actuation are substantially the same as those described above. Therefore, the details are not described again. Herein, the arrangement of the restoring member 379 can maintain feeling when the sliding casing 33A slides with respect to the supporting plate 15. The elastic stop assembly 378 may be used for positioning, that is, limiting the slider 372 at any end of the sliding groove 371 when the slider 372 slides in the sliding groove 371.

In some embodiments, referring to FIG. 14 and FIG. 15, the clamshell electronic device case 10 may further include a keyboard module 19. The keyboard module 19 is located between the upper cover 331 and the supporting plate 15. The keyboard module 19 has a plurality of keycaps 191. The upper cover 331 has at least one perforation H11 provided in the keyboard area A11, and the plurality of keycaps 191 are arranged to extend through the at least one perforation H11. Herein, the supporting plate 15 is further configured to support the keyboard module 19.

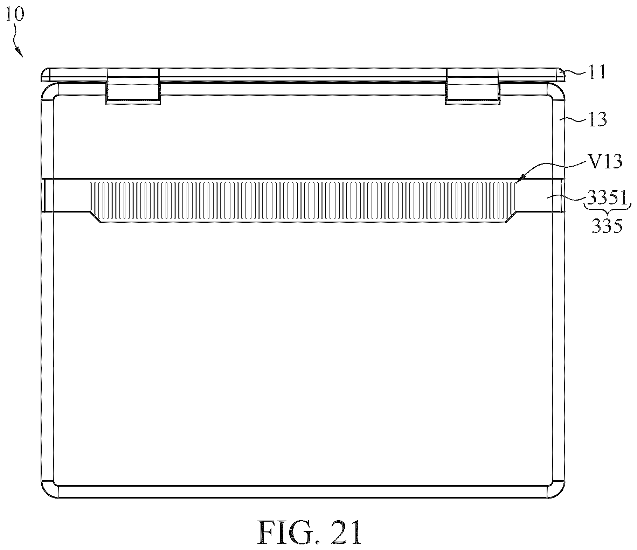

In some embodiments, the middle-section lower cover 335 is a plastic sheet 3351, and the plurality of air holes V13 on the middle-section lower cover 335 are a plurality of through holes extending through the plastic sheet 3351, as shown in FIG. 21.

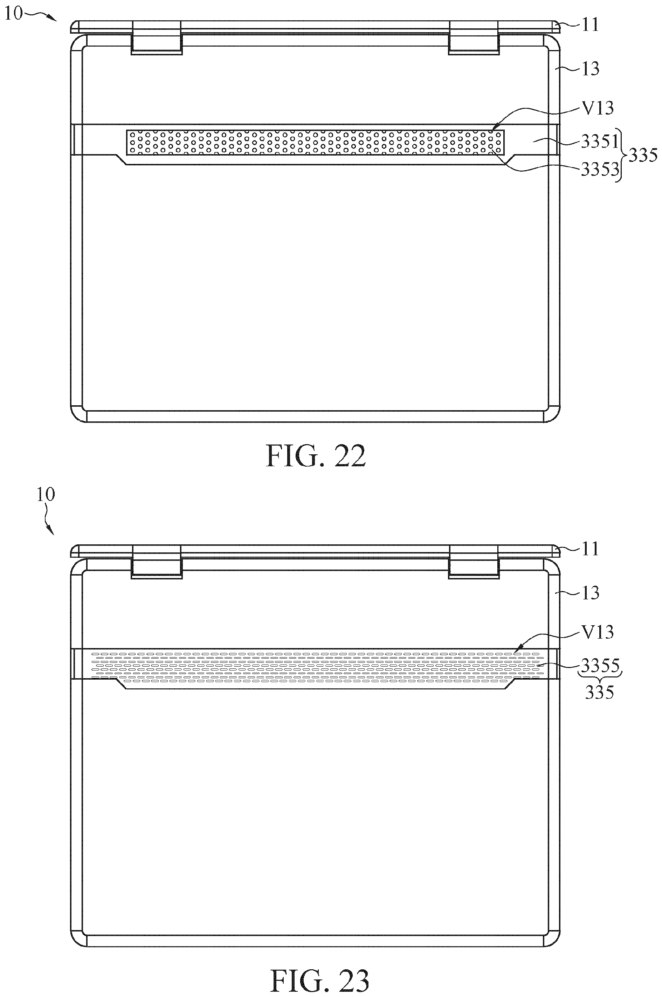

In some other embodiments, the middle-section lower cover 335 is a plastic sheet 3351 with a metal net 3353 embedded therein, and the plurality of air holes V13 are a plurality of meshes of the metal net 3353, as shown in FIG. 22.

In some other embodiments, the middle-section lower cover 335 is a metal sheet 3355, and the plurality of air holes V13 are a plurality of meshes extending through the metal sheet 3355, as shown in FIG. 23.

In some embodiments, referring to FIG. 14, the clamshell electronic device case 10 may further include at least one shortcut key 3391. The shortcut key 3391 is embedded in the extension cover plate 339.

In some embodiments, referring to FIG. 7 or FIG. 14, the clamshell electronic device case 10 may further include a display module 12. The display module 12 is arranged inside the cover 11, and a display surface A21 of the display module 12 is embedded in a front outer surface F21 of the cover 11, thereby forming a display body as a screen of the clamshell electronic device.

Based on the above, in the clamshell electronic device case 10 of any embodiment, the host casing 13 is divided into more than two casing blocks, and a displacement structure is used to separate two adjacent casing blocks based on heat dissipation efficiency requirements, to expand the internal space and further increase a heat dissipation area and an air intake area. In this way, not only the structural strength can be maintained, but also the heat dissipation efficiency can be improved to improve efficiency, and more importantly, consistency of appearance can be maintained. In some embodiments, the clamshell electronic device case 10 utilizes a displacement structure to separate the rear cover 23B from the main casing 23A in response to the usage state, thereby generating a clearance area C13 (that is, an area without the motherboard 18 and the battery module 14) between the internal components (such as the motherboard 18 and the battery module 14) and an exposed area C11 (that is, parts where the heat dissipation module 16 does not overlap with the rear cover 23B and the main casing 23A) of the heat dissipation module 16, thereby improving the heat dissipation effect. In some embodiments, in the clamshell electronic device case 10, a displacement structure is used to provide an actuating effect of the sliding casing 33A sliding away with respect to the main casing 33B when the user has a higher requirement for heat dissipation performance, and a column of heat dissipation holes (that is, air holes V13) are immediately added through the sliding cover structure, to maintain the performance of the clamshell electronic device during high-speed operation.

## Claims

1. A clamshell electronic device case (10), comprising:
a cover (11);
a host casing (13), pivotally connected to the cover (11) and comprising a first part (13A) and a second part (13B) that are matched and detachably connected to each other; and
a supporting plate (15), located inside the host casing (13);
wherein a connection state of the first part (13A) to the second part (13B) is in response to relative displacement of the supporting plate (15) and the first part (13A).

2. The clamshell electronic device case (10) according to claim 1, wherein the first part (13A) is a main casing (23A), the main casing (23A) has a connection side edge (S11) and a free side edge (S13) opposite to each other, the cover (11) is pivotally connected to the connection side edge (S11), the supporting plate (15) is located inside the main casing (23A) and slidably arranged on the main casing (23A), a side edge (S31) of the supporting plate (15) protrudes out of the main casing (23A) through the connection side edge (S11) of the main casing (23A), the second part (13B) is a rear cover (23B), the rear cover (23B) is sleeved on the side edge (S31) of the supporting plate (15), the host casing (13) further comprises a telescopic section (23C), and the telescopic section (23C) is coupled between the connection side edge (S11) of the main casing (23A) and the rear cover (23B).

3. The clamshell electronic device case (10) according to claim 2, further comprising:
a base (271), fixed to the main casing (23A);
a gear assembly (273), located on the base (271);
a link assembly (275), connected to the gear assembly (273) and the supporting plate (15) and configured to drive, in response to rotation of the gear assembly (273), the supporting plate (15) to translate with respect to the main casing (23A); and
a rotating shaft (277), arranged to extend through the base (271), and configured to synchronously drive, in response to flipping of the cover (11), the link assembly (275) by rotating the gear assembly (273), wherein one end of the rotating shaft (277) is fixedly connected to a pivot joint (P21) of the cover (11), and the other end of the rotating shaft (277) is fixed to the gear assembly (273).

4. The clamshell electronic device case (10) according to claim 3, further comprising:
a stop assembly (279), connected to the rotating shaft (277) and configured to cut off, in response to rotation of the rotating shaft (277) until the cover (11) is opened at a predetermined angle with respect to the main casing (23A), the connection between the link assembly (275) and the rotating shaft (277), to stop the synchronous driving of the link assembly (277).

5. The clamshell electronic device case (10) according to claim 2, further comprising:
at least one heat dissipation module (16), embedded in the supporting plate (15); and
a motherboard (18), fixed to the supporting plate (15);
wherein a receiving area (A13) for arrangement of a battery module (14) is defined in the main casing (23A) adjacent to the free side edge (S13), and in a connection state in which the main casing (23A) and the rear cover (23B) are connected to each other, a sum of an overlapping area of the supporting plate (15) and the main casing (23A) and an overlapping area of the receiving area (A13) and the main casing (23A) is less than or equal to a projected area of the main casing (23A); and
wherein in the connection state in which the main casing (23A) and the rear cover (23B) are detached from each other, a clearance area (C13) is formed between the motherboard (18) and the receiving area (A13).

6. The clamshell electronic device case (10) according to claim 2, wherein the supporting plate (15) has at least one sliding groove (H31) extending along the moving direction (Ds) of the relative displacement, at least one slider (B 11) corresponding to the at least one sliding groove (H31) protrudes from an inner surface (F13) of the main casing (23A), each slider (B11) is slidably arranged to extend through the corresponding sliding groove (H31), and the host casing (13) further comprises:
at least one limiting structure (235), configured to limit relative rotation between the slider (B11) and the sliding groove (H31) corresponding to each other, wherein each limiting structure (235) is arranged on a side wall of one of the at least one slider (B11) or arranged on the inner surface (F13) of the main casing (23A) corresponding to one of the at least one sliding groove (H31).

7. The clamshell electronic device case (10) according to claim 2, wherein the main casing (23A) is composed of an upper cover (231) and a lower cover (233), the upper cover (231) is engaged with the lower cover (233) to form an accommodating space therebetween, the upper cover (231) has a keyboard area (A11), and the supporting plate (15) is located in the accommodating space and slidably fixed to an inner surface (F13) of the upper cover (231).

8. The clamshell electronic device case (10) according to claim 1, wherein the second part (13B) is a main casing (33B), the main casing (33B) has a connection side edge (S11) and a free side edge (S13), the connection side edge (S11) is pivotally connected to the cover (11), an accommodating space is provided in the main casing (13), the supporting plate (15) is located in the accommodating space and fixed to an inner surface (F13) of the main casing (33B), the first part (13A) is a sliding casing (33A), a front outer surface (F11) of the main casing (33B) is provided with a keyboard area (A11), and the sliding casing (33A) is located on a side of the main casing (33B) opposite to the front outer surface (F11) and slidably connected to the main casing (33B).

9. The clamshell electronic device case (10) according to claim 8, further comprising:
a sliding groove (371), provided on one of the sliding casing (33A) and the supporting plate (15); and
a slider (372), arranged on the other of the sliding casing (33A) and the supporting plate (15) and arranged to extend through the sliding groove (371).

10. The clamshell electronic device case (10) according to claim 9, further comprising:
two elastic stop assemblies (378), respectively located on two ends of the sliding groove (371) and configured to produce a limiting stop effect on the slider (372).

11. The clamshell electronic device case (10) according to claim 8, further comprising:
a sliding groove (371), provided on one of the sliding casing (33A) and the supporting plate (15);
a slider (372), arranged on the other of the sliding casing (33A) and the supporting plate (15) and arranged to extend through the sliding groove (371);
a link assembly (373), fixedly connected to one of the slider (372) and the sliding groove (371);
a linkage rotating shaft (375), fixedly connected to a pivot joint (P21) of the cover (11), and configured to enable the relative displacement between the sliding groove (371) and the slider (372) through the link assembly (373) in response to flipping of the cover (11); and
two elastic stop assemblies (378), respectively located on two ends of the sliding groove (371) and configured to produce a limiting stop effect on the slider (372).

12. The clamshell electronic device case (10) according to claim 8, further comprising:
a sliding groove (371), provided on one of the sliding casing (33A) and the supporting plate (15);
a slider (372), arranged on the other of the sliding casing (33A) and the supporting plate (15) and arranged to extend through the sliding groove (371);
a link assembly (373), fixedly connected to one of the slider (372) and the sliding groove (371);
a linkage rotating shaft (375), fixedly connected to a pivot joint (P21) of the cover (11), and configured to enable the relative displacement of the sliding groove (371) and the slider (372) through the link assembly (373) in response to flipping of the cover (11);
a restoring member (379), connecting the sliding casing (33A) and the supporting plate (15) and configured to provide an actuating effect of the relative displacement; and
a sliding cover plate (377), fixed to the sliding casing (33A), wherein the sliding groove (371) is an elongated through hole (H33) on the sliding cover plate (377), and the slider (372) is fixed to the supporting plate (15).

13. The clamshell electronic device case (10) according to claim 8, wherein the main casing (33B) comprises an upper cover (331) having the keyboard area (A11), an upper-side lower cover (333), and a middle-section lower cover (335) having a plurality of air holes (V13), a left side edge (S123) and a right side edge (S143) of the upper-side lower cover (333) are fixedly connected to a left side edge (S121) and a right side edge (S141) of the upper cover (331) respectively, an upper side edge (S113) of the upper-side lower cover (333) and an upper side edge (S111) of the upper cover (331) jointly form the connection side edge (S11), the middle-section lower cover (335) is fixedly connected to the upper-side lower cover (333) to form a wire (S15) between the middle-section lower cover (335) and the upper-side lower cover (333), a left side edge (S125) and a right side edge (S145) of the middle-section lower cover (335) are fixedly connected to the left side edge (S121) and the right side edge (S141) of the upper cover (331) respectively, the sliding casing (33A) comprises a lower-side lower cover (337) and an extension cover plate (339), the lower-side lower cover (337) is slidably connected to the upper cover (331) and detachably connected to a lower side edge of the upper-side lower cover (333), a lower side edge (S135) of the extension cover plate (339) and a lower side edge (S133) of the lower-side lower cover (337) jointly form the free side edge (S13), and the upper-side lower cover (333) is located in a same plane as the lower-side lower cover (337) but located in different planes from the middle-section lower cover (335);
wherein in response to the connection state in which the main casing (33B) and the sliding casing (33A) are detached from each other, the sliding casing (33A) is slid open with respect to the main casing (33B) to expose the extension cover plate (339), and an upper side edge (S19) of the lower-side lower cover (337) is detached from the lower side edge of the upper-side lower cover (333) to expose the middle-section lower cover (335); and
wherein in response to the connection state being that the main casing (33B) and the sliding casing (33A) are connected to each other, the sliding casing (33A) is retracted with respect to the main casing (33B) to receive the extension cover plate (339) in the accommodating space, and an upper side edge (S19) of the lower-side lower cover (337) and the lower side edge of the upper-side lower cover (333) are connected to each other to cover the middle-section lower cover (335).

14. The clamshell electronic device case (10) according to claim 13, wherein the middle-section lower cover (335) is a plastic sheet (3351) with a plurality of through holes as the plurality of air holes (V13),
a plastic sheet (3351) with a metal net (3353) embedded therein, or a metal sheet (3355) with a plurality of meshes as the plurality of air holes (V13).

15. The clamshell electronic device case (10) according to claim 13, further comprising:
a keyboard module (19), located between the upper cover (331) and the supporting plate (15) and having a plurality of keycaps (191), wherein the upper cover (331) further has at least one perforation (H11) provided in the keyboard area (A11), the plurality of keycaps (191) are arranged to extend through the at least one perforation (H11), and the supporting plate (15) is configured to support the keyboard module (19); and
at least one shortcut key (3391), embedded in the sliding casing (339).
